Europäisches Patentamt

European Patent Office

Office européen des brevets

(11) Numéro de publication: **0 211 789**
**A1**

## (12) DEMANDE DE BREVET EUROPEEN

(21) Numéro de dépôt: 86450007.9

(22) Date de dépôt: 10.04.86

(51) Int. Cl.4: **C14B 5/00**

(30) Priorité: 22.05.85 FR 8507827

(43) Date de publication de la demande:
**25.02.87 Bulletin 87/09**

(84) Etats contractants désignés:
**AT BE CH DE GB IT LI LU NL SE**

(71) Demandeur: **Etablissements G. Imbert**

**F-47800 Miramont de Guyenne(FR)**

(72) Inventeur: **Bonnet, Pierre**
**"La Brice"**
**F-47800 Miramont de Guyenne(FR)**
Inventeur: **Villaret, Rémy**
**61 rue du Moulin**
**F-47800 - Miramont de Guyenne(FR)**

(74) Mandataire: **Thébault, Jean-Louis**
**Cabinet Jean-Louis Thébault 50, Cours de**
**Verdun**
**F-33000 Bordeaux(FR)**

(54) **Procédé de découpe automatique d'une peau ou similaire à partir du placement interactif de gabarits sur ladite peau et dispositif pour sa mise en oeuvre.**

(57) L'invention concerne un procédé de découpe automatique d'une peau ou similaire caractérisé en ce qu'il consiste à disposer la peau(4) sur le plan de travail d'une table de découpe (1) automatisée, à placer manuellement les gabarits (8) sur la peau à l'intérieur d'un cadre prédéterminé (9), chaque gabarit comportant un moyen de codage permettant l'identification et la reconnaissance de position du gabarit dans le cadre, à photographier le placement réalisé, à analyser l'image obtenue en vue de lire les codes portés par les gabarits et à commander le déplacement de l'outil de coupe (2) à l'intérieur dudit cadre en vue de reproduire les contours des gabarits décodés. L'invention concerne également un dispositif pour la mise en oeuvre du procédé.

Application notamment à la découpe de peaux.

FIG.1.

# PROCEDE DE DECOUPE AUTOMATIQUE D'UNE PEAU OU SIMILAIRE A PARTIR DU PLACEMENT INTE-RACTIF DE GABARITS SUR LADITE PEAU ET DISPOSITIF POUR SA MISE EN OEUVRE

La présente invention a trait à un nouveau procédé de découpe directe et automatique d'une peau après placement manuel sur celle-ci de gabarits.

L'invention s'applique plus particulièrement à la découpe de patrons dans l'industrie du cuir, notamment l'industrie de la chaussure, mais peut tout aussi bien trouver son application dans tous autres domaines dans lesquels se pose le problème du placement optimal de profils variés et plus ou moins compliqués sur un support quelconque en vue de la découpe desdits profils.

Dans le domaine de la chaussure la découpe de pièces ayant un profil complexe est réalisée principalement à l'aide d'emporte-pièce. Cette solution permet à l'opérateur de rester maître dans le placement de son outil sur la peau à découper mais est onéreuse pour des petites séries et allonge les temps de réponse de l'entreprise à cause des délais de réalisation de l'outillage.

Depuis quelques années des technologies nouvelles sont apparues dans la découpe des peaux et tendent à remplacer l'emporte-pièce.

C'est ainsi que deux nouveaux moyens de découpe au rayon laser et au jet de fluide ont été mis au point et présentent maintenant, asservis à des moyens informatiques, une flexibilité totale en permettant à une entreprise de maîtriser en un temps très court la diversité de sa découpe.

Cependant le système de placement sur la peau des formes à découper devient alors complexe et onéreux, et n'a pas encore été résolu avec satisfaction.

Selon une première technique de placement connue, une peau-témoin est recouverte manuellement par le coupeur de plusieurs gabarits en papier ou carton. Une fois la peau ainsi tapissée, elle est "scannée" et mémorisée dans un ordinateur qui, ensuite, commandera la découpe des peaux en fonction des informations mémorisées. Un tel procédé est long, complexe et peu fiable.

Suivant une autre technique plus sophistiquée et automatisée, un ordinateur prend en compte chaque peau à découper en fonction des défauts et organise dans la surface utile le positionnement des divers patrons qu'on lui a mis en mémoire préalablement, puis commande la découpe de la peau.

Malheureusement un tel système, complexe et coûteux, n'a jamais pu être mené jusqu'à un stade opérationnel et fiable et est inutilisable industriellement.

Suivant un autre mode de placement, dit semi-automatique, les différents patrons ainsi que la peau à découper avec ses défauts et ses sens prêtants sont enregistrés sur ordinateur et peuvent être visualisés sur un écran. A l'aide d'un "light pen" l'opérateur choisit les patrons qui seront découpés et s'occupe du positionnement optimal manuel sur la peau également visualisée. Quand l'opérateur à rempli la peau il demande à l'ordinateur d'enregistrer le placement en vue de la découpe ultérieure.

Un tel système est lent et peu pratique car il nécessite l'enregistrement préalable de chaque peau avec ses défauts et ses sens prêtants.

Le but de l'invention est de proposer une nouvelle technique de découpe automatique d'une peau à partir d'un placement interactif manuel de gabarits permettant de gagner un temps appréciable dans sa mise en oeuvre et combinant à la fois les avantages d'un placement manuel par le coupeur directement sur la peau et les avantages d'une commande automatique informatisée de la découpe de la peau par les moyens modernes existant actuellement tels que les dispositifs de découpe à jet d'eau ou à laser.

A cet effet, l'invention a pour objet un procédé de découpe d'une peau ou similaire à partir du placement interactif de gabarits sur ladite peau, caractérisé en ce qu'il consiste :

-à disposer la peau directement sur le plan de travail d'une table de découpe d'un système de découpe automatisée du type à jet d'eau ou à laser par exemple ;

-à placer manuellement les gabarits de manière optimale sur la peau, à l'intérieur d'un cadre prédéterminé dans ledit plan de travail, chaque gabarit étant muni préalablement d'un moyen de codage permettant l'identification du gabarit et la reconnaissance de sa disposition dans ledit cadre prédéterminé ;

-à photographier l'ensemble des gabarits ainsi positionnés dans ledit cadre ;

-à enregistrer l'image de ce placement ;

-à analyser pas à pas ladite image en vue de reconnaître successivement lesdits moyens de codage, et,

-à chaque code lu, à commander, à partir de la saisie et de l'enregistrement préalables de tous les contours de gabarits et de leurs moyens de codage, le déplacement de l'outil de coupe à l'intérieur dudit cadre en vue de reproduire le contour du gabarit décodé.

Un tel procédé permet de gagner un temps substantiel au niveau de l'exploitation car la découpe de la peau peut intervenir pratiquement immédiatement après le placement manuel du fait que la peau n'a pas à être déplacée, amenée et positionnée sur le système de découpe : elle est déjà prête à être découpée avant même que le placement soit réalisé.

Si ce procédé nécessite une mémorisation préalable des diverses formes de gabarit et des codes affectés à chaque forme, ces opérations sont effectuées sur un système comprenant un calculateur, une table à digitaliser et une table à tracer, et complètement autonome et indépendant de l'installation de découpe mettant en oeuvre le procédé de l'invention. En phase d'exploitation cette installation peut fonctionner pratiquement en continu à partir de données et instructions stockées sur cassettes par exemple et facilement manipulables et interchangeables.

Suivant une autre caractéristique principale du procédé, le moyen de codage dont est muni chaque gabarit est du type code barre circulaire et constitué d'un disque annelé appliqué ou représenté sur l'une des faces du gabarit en un endroit approprié et auquel est associé un point dit d'orientation matériellement décelable sur l'image du placement, ledit point étant appliqué ou représenté sur ladite face du gabarit à une distance prédéterminée du centre du disque annelé et à l'extérieur de celui-ci.

Avantageusement chaque forme de gabarit est enregistrée par l'intermédiaire d'une représentation vectorisée constituée d'un faisceau de vecteurs issus du centre du disque annelé de codage et dont les extrémités, reliées une à une, reproduisent le contour dudit gabarit.

D'autres caractéristiques et avantages de l'invention ressortiront de la description qui va suivre, donnée à titre d'exemple uniquement et en regard des dessins annexés sur lesquels :

- Figure 1 représente schématiquement une installation pour la mise en oeuvre du procédé de l'invention ;

-Figure 2 illustre un mode préféré de mémorisation de formes de gabarit ;

-Figure 3 représente un gabarit muni de moyens de codage conformes à l'invention ;

-Figure 4 représente un disque de codage selon l'invention ;

-Figure 5 illustre la manière de repérer deux parties du disque séparées par un diamètre ;

-Figure 6 représente une variante du gabarit de la figure 2 ;

-Figure 7 illustre la représentation vectorisée de l'évidement du gabarit de la figure 6 ;

-Figure 8 illustre un gabarit selon l'invention dans la position de repérage de la saisie ;

-Figure 9 illustre le gabarit de la figure 8 après rotation au moment de son placement, et

-Figure 10 représente un gabarit muni d'un autre moyen de codage selon l'invention.

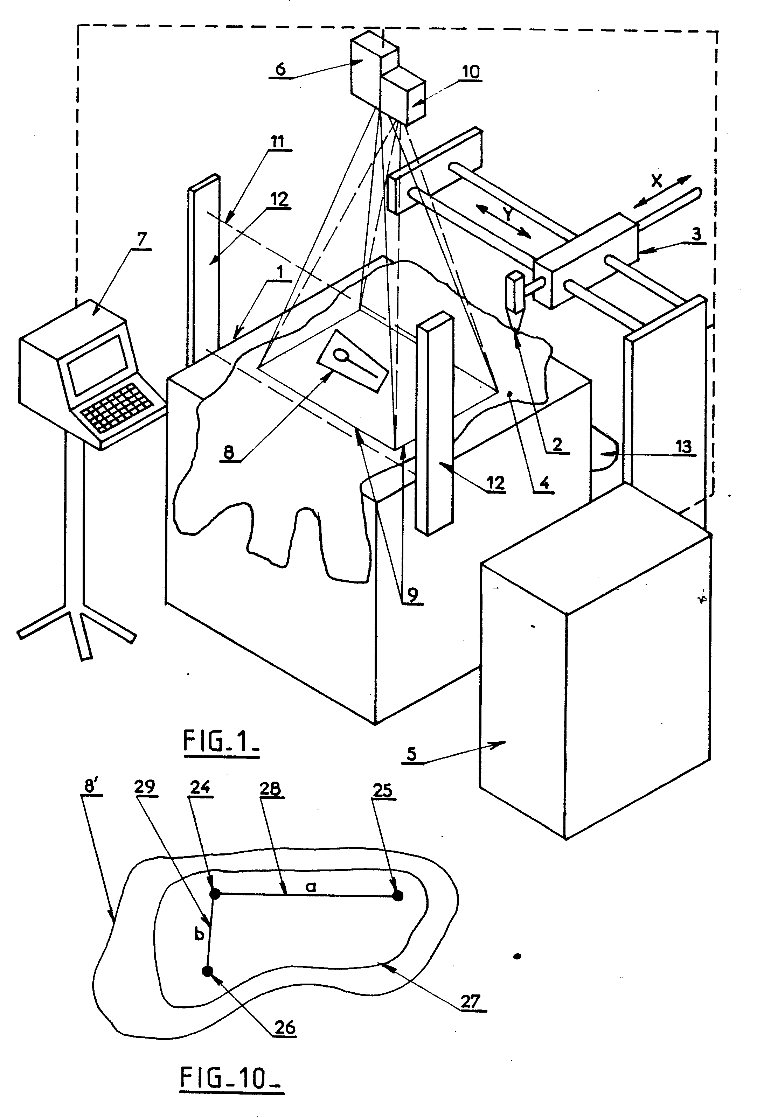

L'installation schématisée sur la figure 1 comprend une table de découpe 1 par exemple d'un dispositif de coupe à jet d'eau de type connu, dont la buse 2 de projection d'eau est mobile suivant deux directions orthogonales X et Y par l'intermédiaire d'un dispositif classique à coulisse et chariot symbolisé en 3.

La buse 2 peut ainsi se déplacer en tous points au-dessus du plan de coupe de la table 1 sur lequel est posée la peau 4 ou analogue à découper, celle-ci étant maintenue en place par un système d'aspiration bien connu plaquant la peau sur la table.

Le dispositif de coupe est commandé à partir d'un processeur faisant partie d'un ensemble calculateur symbolisé en 5, lui-même relié à une caméra 6 montée fixe au-dessus du plan de coupe de la table 1 et à un terminal 7 à clavier et écran de visualisation.

La zone utile à l'intérieur de laquelle doivent être posés sur la peau 4 les gabarits, tels que celui représenté en 8, est délimitée sur la table de découpe par une référence lumineuse, par exemple un trait lumineux 9 dessinant un rectangle et projeté par une boîte à lumière 10 disposée à côté de la caméra ou entourant celle-ci. Une telle marque lumineuse 9 matérialisera par exemple un plan de travail de 600 mm × 400 mm.

La boîte à lumière 10 peut aussi être constituée par un projecteur éclairant la surface de travail, la surface éclairée délimitant la zone utile.

En outre, une barrière infra-rouge schématisée en 11 et générée par un dispositif approprié conventionnel 12 est chargée d'interdire l'accès à la zone de travail pendant que le système de coupe 2-3 est en mouvement. La barrière 11 est disposée sur l'avant de la table de découpe, entre l'opérateur et le plan de travail ; des barrières latérales pouvant être également prévues si nécessaire.

Le fonctionnement de cette installation est le suivant . Après avoir disposé les divers gabarits 8 sur le plan de travail, à l'intérieur du champ délimité par le cadre lumineux 9 et suivant le placement optimal souhaité, l'opérateur avertit le calculateur 5, par exemple par un signal externe issu d'un bouton poussoir. Le calculateur 5 commande une prise de vue par la caméra 6 du plan de travail délimité par le cadre 9. Pendant que l'opérateur range ses gabarits le processeur de l'ensemble 5 effectue sa routine de reconnaissance des gabarits 8 (formes et orientations) à l'intérieur du cadre 9. Le calculateur calcule successivement pour chaque gabarit la position dans ledit plan de travail d'un certain nombre de points de contour du gabarit (préalablement saisis et mémorisés suivant une procédure qui sera décrite plus loin) et donne l'ordre, après un signal d'autorisation donné par l'opérateur, de procéder à la découpe successive des divers gabarits reconnus et positionnés dans le plan de travail en commandant le dispositif 2-3 par l'intermédiaire du processeur gérant ce dispositif.

La caméra 6 est par exemple du type CCD à transfert de charge ou similaire, avec une définition de 488 et 388 lignes.

Le signal de la caméra est transmis et traité par l'ensemble calculateur 5 en vue de reconnaître à partir du code la forme et la position de chaque gabarit à l'intérieur du cadre 9, suivant un système de repérage cartésien identique bien entendu à celui (X,Y) du déplacement de la buse 2.

Dès la découpe de la dernière forme reconnue par le calculateur, la buse 2 est mise en position repos et la barrière infra-rouge 11 supprimée. Si au cours de la découpe une partie du corps de l'opérateur ou un objet quelconque venait s'interposer sur la trajectoire du faisceau infra-rouge le système de découpe serait instantanément arrêté.

Lorsque la découpe est finie, l'opérateur déplace à la main la peau 4 pour présenter dans le cadre 9 une nouvelle surface de peau à découper, l'extrémité avant de la peau (côté système de découpe 2-3) étant reçue dans une gouttière transversale 13 disposée dans l'intervalle séparant la table 1 du bâti du système de découpe 2-3.

Le terminal 7 à clavier permet au coupeur de dialoguer avec la machine. Il permet d'indiquer à tout instant le cumul des pièces découpées. Associé à un ronfleur il peut signaler les gabarits à ne plus utiliser.

Le coupeur peut modifier, grâce à ce terminal, le nombre de pièces qu'il veut découper et, à tout instant, vérifier le bon déroulement des opérations.

Pour que le processeur de l'ensemble calculateur 5 puisse traiter les images fournies par la caméra 6, il faut que les gabarits soient codés afin que leurs formes, types, orientation dans le plan de coupe soient facilement, rapidement et de manière fiable, reconnus.

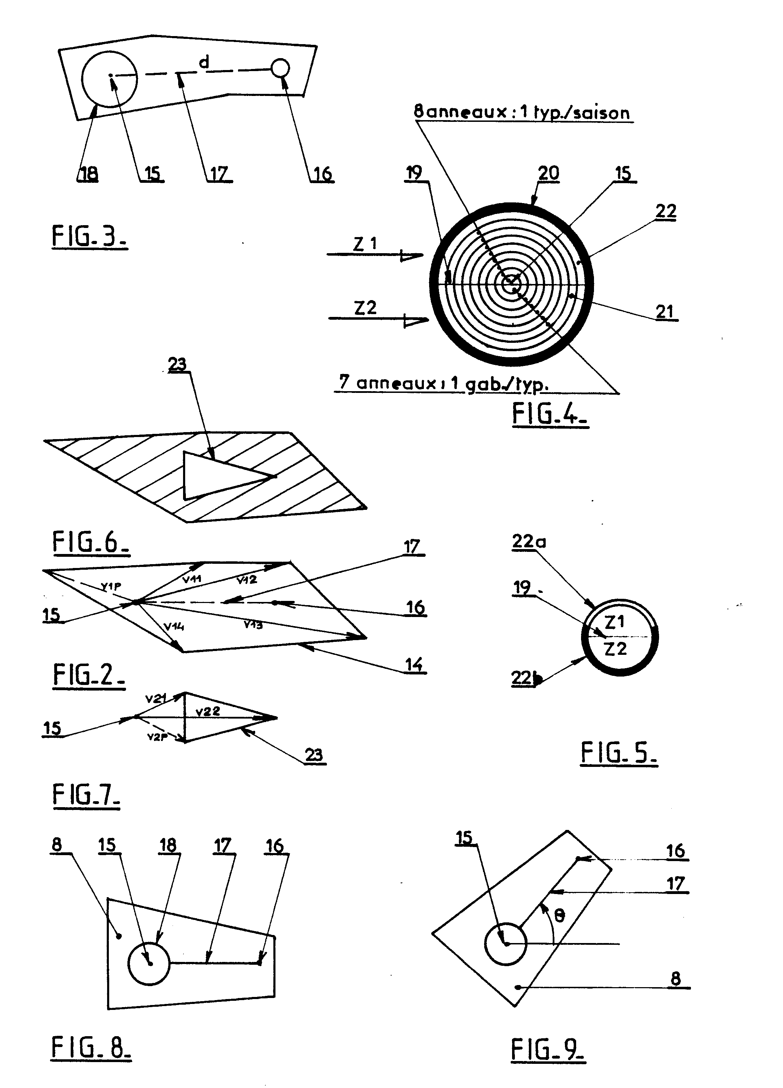

A cet effet, conformément à l'invention, chaque gabarit aura sa forme vectorisée et codée de la manière suivante, illustrée par les figures 2 et 3.

Sur la figure 2 on a représenté en 14 le contour d'une forme de gabarit définissant un polygone. Ce polygone est muni d'un centre de marquage 15 et d'un point 16 de référence pour l'orientation dudit polygone. Le centre 15 constitue l'origine d'un marquage codé contenant toutes les informations nécessaires à l'identification de la forme considérée. Ce centre 15 sert également d'origine à un faisceau de vecteurs tels que $V_{1p}$, $V_{11}$, $V_{12}$, ..., $V_{14}$ dont les extrémités reliées reconstituent le contour 14.

Ainsi, ce contour 14 peut être parfaitement défini par les vecteurs ci-dessus issus de la même origine 15, et dont on connît les modules et arguments respectifs, ces derniers étant déterminés par rapport à la direction dite principale 17 définie par les deux points 15 et 16.

N'importe quelle forme de gabarit peut être définie ainsi, le contour du gabarit étant constitué par des segments de droite reliant les extrémités des différents vecteurs issus du point 15. Bien entendu, quand la forme du gabarit est polygonale, comme représenté sur la figure 2, il suffit d'un petit nombre de vecteurs ; pour des formes ou parties de forme arrondies, il faudra multiplier le nombre de vecteurs de façon que le contour "vectorisé" soit égal au contour théorique à la précision voulue près.

Le marquage codé, de préférence, ne doit pas avoir de direction principale qui nécessiterait une détermination de celle-ci par un long traitement.

Aussi, le code barre circulaire bien connu est tout particulier indiqué ; quelle que soit la position angulaire du gabarit, le processeur de l'ensemble 5 pourra lire le code sur le diamètre horizontal (ou n'importe quel autre diamètre pris comme référence) et donc décoder le nombre d'anneaux noirs et blancs, porteurs d'information, sur ce diamètre.

La figure 3 représente un gabarit muni conformément à l'invention d'un code barre circulaire symbolisé en 18 et centré sur le centre de marquage 15 et d'un point 16 de référence d'orientation.

La figure 4 représente un mode de réalisation préféré du codage utilisé. Celui-ci est constitué de deux demi-zones Z1 et Z2 séparées par un diamètre 19, comprenant chacune neuf anneaux concentriques (en blanc sur la figure) et un anneau périphérique 20 (en noir).

Dans la zone Z1, huit demi-anneaux codent le type de chaussures dans une saison.

Dans la zone Z2, sept demi-anneaux codent le numéro du gabarit dans le type de chaussure et le demi-anneau extérieur 21 code la saison (été ou hiver).

Le nombre des anneaux peut bien entendu varier selon le nombre de gabarits et de types de chaussure. Toutefois, ce nombre d'anneaux est contenu entre deux limites extrêmes qui sont, d'une part, celle imposée par la résolution spatiale de la caméra 6. Selon le type de caméra utilisé actuellement la résolution est de 1 à 1,5 mm par pixel (ou point image), les anneaux doivent donc avoir une épaisseur supérieure à cette résolution, par exemple 2 mm.

L'autre limite est celle du diamètre maximal des anneaux concentriques qu'il est possible de placer sur le plus petit gabarit.

Le neuvième anneau (22) est chargé de déterminer les demi-zones Z1 et Z2.

Cet anneau 22 est blanc par exemple pour la zone Z1 et noir pour la zone Z2.

Pour éviter toutefois un problème de lecture au cas où le diamètre suivant lequel le processeur lit le code coïnciderait avec le diamètre 19, l'anneau 22 est divisé en deux demi-anneaux blanc (22a) et noir (22b) dissymétriques.

De la sorte, si à la lecture l'anneau 22 est de même couleur de chaque côté du centre, le processeur est commandé pour lire suivant un diamètre de lecture orthogonal à celui de la lecture précédente, en sorte que l'on sera sûr de détecter deux couleurs distinctes sur l'anneau 22, de part et d'autre du centre, et donc de lire les deux zones Z1 et Z2 sans distorsion possible.

Dans le type de codage illustré par la figure 4, on peut prendre en compte jusqu'à 256 types différents de chaussures par saison, à raison de deux saisons possibles (été ou hiver) et jusqu'à 128 modèles de gabarits par type.

Bien entendu, si le nombre de modèles de chaussures est réduit, il n'est pas nécessaire de diviser les anneaux de codage en deux zones et d'ajouter un anneau 22 de détermination de zone.

Sur la figure 3 le codage à anneaux concentriques 18 est symbolisé par le seul anneau périphérique. Le point 16 est situé à l'extérieur de cet anneau périphérique et se trouve à une distance d du centre de marquage 15.

Il est à noter que le processeur peut calculer la distance d, ce qui permet de vérifier le code lu (cette distance d étant stockée dans la description vectorisée du gabarit) et éventuellement de discerner deux formes ayant le même code.

La figure 6 illustre une forme de gabarit identique, pour ce qui concerne le contour extérieur, à celle de la figure 2, mais comportant un évidement triangulaire 23.

L'invention permet de tenir compte de cette partie évidée en vectorisant (figure 7) la forme triangulaire 23 à partir du même centre 15 et du même point d'orientation 16 (vecteurs $V_{2p}$, $V_{21}$, $V_{22}$). Il est à noter que le vecteur $V_{2p}$, comme le vecteur $V_{1p}$ (figure 2), correspond à un déplacement en position levée de l'outil de coupe 2, ce dernier ne devant entrer en action qu'à partir de l'extrémité de ce vecteur.

Il est à noter également que les différentes formes intérieures, telles que 23, à découper sont simplement mémorisées par le calculateur et n'ont pas besoin d'apparaître sur le gabarit.

Les vecteurs définissant une forme de gabarit particulière sont mémorisés après repérage suivant une orientation d'origine quelconque. Par exemple (figure 8) le gabarit 8 est pris en compte ou saisi avec la direction principale 17 horizontale.

Lorsque ce gabarit, mis en place par l'opérateur, sera reconnu par le calculateur 5, par l'intermédiaire de la caméra 6, il peut se trouver dans n'importe quelle position angulaire par rapport à la position de saisie. Dans la position de la figure 9, le gabarit 8 a subi une rotation de $\theta$ de sa direction principale 17.

Pour trouver les coordonnées des points du contour du gabarit de la figure 9, il suffit d'effectuer une rotation de $\theta$ à tous les vecteurs déterminant le contour du gabarit de la figure 8. C'est ce qu'opère l'ensemble calculateur 5 après détection du centre 15, du point 16 et du codage 18.

La saisie des gabarits et leur codage s'opèrent avec un système totalement autonome et indépendant de l'installation de découpe et comprenant un calculateur, une table à digitaliser et une table à tracer.

La table à digitaliser, pilotée par le calculateur, permet d'entrer une forme de gabarit quelconque. A cet effet, on positionne le dessin du gabarit sur cette table et on suit son contour avec un stylo ou une souris, selon la table employée. Alors, le calculateur stocke, en mémoire, le contour. Puis, il effectue la recherche du nombre minimal de points nécessaires à la description du gabarit avec les tolérances imposées par des méthodes de contrôle d'erreur telles que les moindres carrés. Le calculateur peut alors réaliser la "vectorisation" de la forme en définissant, lui-même ou, éventuellement, par l'intermédiaire de l'utilisateur du système selon l'invention, la position du disque à anneaux concentriques (18) représentant le code du gabarit, qui aura été défini au préalable, automatiquement ou manuellement, et le point 16 nécessaire à la définition de l'orientation. Une fois la "vectorisation" effectuée, le calculateur, après avoir stocké en mémoire de masse (disquette) ce contour, pourra le dessiner par l'intermédiaire de la table traçante. Ce tracé peut être effectué soit sur un matériau peu épais rigide, qui sera ensuite découpé par un procédé quelconque, soit sur une feuille blanche qui permettra de découper, par l'intermédiaire de l'installation de la figure 1, un matériau plus rigide en utilisant la disquette nouvellement écrite, puis de coller sur ce gabarit cette feuille marquée.

Le tracé du gabarit comprendra :

-un tracé du contour afin de contrôler la précision avec l'original ;

-le tracé du disque de codage (18) ;

-le tracé du point d'orientation 16 ;

-le marquage, de façon lisible, du gabarit.

Cette solution permet de découper autant de jeux de gabarits que nécessaire.

L'ensemble calculateur 5 de l'installation de la figure 1 reçoit les disquettes ainsi réalisées, associées au(x) type(s) de chaussure voulu(s). L'opérateur donne au calculateur 5 le signal de chargement des formes stockées sur la ou les disquettes en question.

Les cycles réels de travail de la machine peuvent alors commencer.

Le processeur de l'ensemble calculateur 5 recherche (sur l'image mémorisée du plan de travail photographié par la caméra 6) les codages 18 et points d'orientation 16 pour chaque forme. Puis, il effectue la rotation sur la première forme trouvée. Les résultats des calculs sont transmis au processeur gérant le système de découpe 2-3 qui décide lui-même de sa mise en action après avoir reçu suffisamment de points du contour. Le calculateur 5 passe alors à la deuxième forme et ainsi de suite jusqu'à la dernière forme à découper reconnue sur ladite image mémorisée, après laquelle il donne l'ordre au système 2-3 de se mettre en position repos.

La figure 10 illustre une variante de réalisation des moyens de codage des gabarits.

Suivant cette variante, le gabarit 8' comporte trois points 24,25,26 inscrits dans un contour fermé 27 de forme quelconque permettant d'isoler les points et de ne pas considérer, lors de l'analyse de l'image du placement, les points de gabarits situés à côté de celui en cours de reconnaissance.

Les trois points sont reliés par deux droites 28 et 29 qui permettront au calculateur de retrouver rapidement, à partir du premier point localisé, les deux autres points. Chaque point a un diamètre de 6mm afin d'être facilement détectable par imagerie.

L'intersection des deux segments 28,29 donne l'origine (point 24) de la pièce 8'. Le segment le plus long (28) définit la direction donc l'orientation du gabarit 8' dans le plan.

La combinaison des distances a et b séparant le point origine 24 des deux autres points est unique et définit le codes des gabarits, types, saisons, années, etc...

La distance entre deux points est comprise par exemple entre 20 mm et 2.000 mm, par pas de 4 mm (limite de résolution de l'imagerie), ce qui autorise plus de 90.000 combinaisons différentes.

Par ailleurs, le point 24, intersection des deux droites 28,29, constitue le point origine de la vectorisation du contour du gabarit 8' comme dans le cas des figures 2 et 3.

La position des trois points, leur traçage ainsi que celui du contour 27 et des segments 28,29, sont réalisés automatiquement lors de ladite phase de digitalisation.

Il est à noter que la machine peut couper simultanément plusieurs peaux en matelas. A cet effet, afin de conserver un cadre 9 de dimensions constantes quelle que soit l'épaisseur de la ou des peaux sur la table de découpe, celle-ci est montée réglable en position verticalement par rapport à l'ensemble 6-10. L'inverse peut également être prévu, à savoir une table fixe et l'ensemble caméra-boîte à lumière mobile verticalement.

Enfin, l'invention n'est bien entendu pas limitée aux modes de réalisation représentés et décrits ci-dessus mais en couvre au contraire toutes les variantes.

**Revendications**

1. Procédé de découpe d'une peau ou similaire à partir du placement interactif de gabarits sur ladite peau, caractérisé en ce qu'il consiste :

-à disposer la peau (4) directement sur le plan de travail d'une table de découpe (1) d'un système de découpe automatisée (2-3) du type à jet d'eau ou à laser par exemple ;

-à placer manuellement les gabarits (8) de manière optimale sur la peau, à l'intérieur d'un cadre (9) prédéterminé dans ledit plan de travail, chaque gabarit étant muni préalablement d'un moyen de codage permettant l'identification du gabarit et la reconnaissance de sa disposition dans ledit cadre prédéterminé ;

-à photographier l'ensemble des gabarits ainsi posi-tionnés dans ledit cadre (9) ;

-à enregistrer l'image de ce placement ;

-à analyser pas à pas ladite image en vue de reconnaître successivement lesdits moyens de codage, et,

-à chaque code lu, à commander, à partir de la saisie et de l'enregistrement préalables de tous les contours de gabarits (8) et de leurs moyens de codage, le déplacement de l'outil de coupe (2) à l'intérieur dudit cadre (9) en vue de reproduire le contour du gabarit décodé.

2. Procédé suivant la revendication 1, caractérisé en ce que le moyen de codage dont est muni chaque gabarit (8) est du type code barre circulaire et constitué d'un disque annelé (18) appliqué ou représenté sur l'une des faces du gabarit en un endroit approprié et auquel est associé un point dit d'orientation (16) matériellement décelable sur l'image du placement, ledit point étant appliqué ou représenté sur ladite face du gabarit à une distance prédéterminée du centre (15) du disque annelé (18) et à l'extérieur de celui-ci.

3. Procédé suivant la revendication 2, caractérisé en ce que le disque annelé de codage (18) est divisé en deux zones (Z1,Z2) séparées par un diamètre (19), l'une des zones servant à coder les types différents de chaussures et, l'autre, les modèles de gabarits par type de chaussure.

4. Procédé suivant la revendication 2 ou 3, caractérisé en ce que le disque (18) comporte un anneau (21) servant à coder l'une des deux saisons été ou hiver.

5. Procédé suivant la revendication 3 ou 4, caractérisé en ce que le disque (18) comporte un anneau (22) de détermination des dites zones (Z1,Z2) dissymétrique par rapport au diamètre (19) de partage des zones.

6. Procédé suivant la revendication 1, caractérisé en ce que le moyen de codage dont est muni chaque gabarit (8') est constitué par trois points distants (24,25,26) entourés par une ligne continue (27) et dont un est relié aux deux autres par un segment rectiligne (28,29), les longueurs (a,b) desdits segments permettant d'identifier le gabarit (8').

7. Procédé suivant l'une des revendications 1, 2 et 6, caractérisé en ce que chaque forme de gabarit (8, 8') est enregistrée par l'intermédiaire d'une représentation vectorisée constituée d'un faisceau de vecteurs issus d'un point origine (15,24) du moyen de codage (18,24 à 29) et dont les extrémités, reliées une à une, reproduisent le contour dudit gabarit.

8. Dispositif pour la mise en oeuvre du procédé selon l'une quelconque des revendications 1 à 7, comprenant un système de découpe du type à jet d'eau, à laser ou similaire, comportant une table de découpe (1) et un ordinateur de commande de l'outil de découpe (2), ledit dispositif étant caractérisé en ce qu'il comporte, en outre, une caméra (6) disposée au dessus du plan de travail de la table de découpe (1) et un ensemble calculateur (5) relié à ladite caméra et audit ordinateur du système de découpe et comportant notamment un processeur et une unité d'entrée, sous forme de disquettes ou similaires, des informations mémorisées relatives aux gabarits, à leur représentation vectorisée et à leur codage.

9. Dispositif suivant la revendication 8, caractérisé en ce que la zone utile du plan de travail de la table de découpe (1) est délimitée par une surface ou marque lumineuse (9) projetée sur la peau (4) en place sur ladite table, ladite caméra (6) étant focalisée sur la zone ainsi délimitée.

**FIG. 1.**

**FIG. 10.**

0 211 789

**FIG. 3.**

18  15  17  16

d

**FIG. 4.**

8 anneaux : 1 typ./saison

19  20  15  22

Z 1

Z 2

21

7 anneaux : 1 gab./typ.

**FIG. 6.**

23

**FIG. 2.**

17

V11  V12

Y1P

15

V14  V13

16

14

**FIG. 5.**

22a

19

Z1
Z2

22b

**FIG. 7.**

V21

V22

15

V2P

23

**FIG. 8.**

8  15  18  17  16

**FIG. 9.**

15

16

17

θ

8

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int. Cl.4) |
|---|---|---|---|
| X | FR-A-2 506 782   (BENEDITE)<br>* En entier * | 1 | C 14 B    5/00 |
| A | | 2,8 | |
| | --- | | |
| A | FR-A-2 131 576   (R.C.A.)<br>* En entier * | 2,3 | |
| | ----- | | |

DOMAINES TECHNIQUES
RECHERCHES (Int. Cl.4)

C 14 B
A 41 H
B 26 F

Le present rapport de recherche a été établi pour toutes les revendications

| Lieu de la recherche | Date d'achèvement de la recherche | Examinateur |
|---|---|---|
| LA HAYE | 26-08-1986 | DE RIJCK F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille. document correspondant

OEB Form 1503 03 82